# EUROPÄISCHE PATENTSCHRIFT

(11) **EP 3 021 261 B1**
(45) Veröffentlichungstag und Bekanntmachung des Hinweises auf die Patenterteilung: **30.05.2018**
(21) Anmeldenummer: 15003177.1
(22) Anmeldetag: 05.11.2015
(51) Int. Cl.: G06K 19/02, G06K 19/073

(54) **DATENTRÄGER MIT EINER LINSENSTRUKTUR**
DATA CARRIER WITH LENS STRUCTURE
SUPPORT DE DONNÉES COMPRENANT UNE STRUCTURE DE LENTILLE

(30) Priorität: 17.11.2014 DE 102014016924
(43) Veröffentlichungstag der Anmeldung: 18.05.2016
(73) Patentinhaber: Giesecke+Devrient Mobile Security GmbH, 81677 München (DE)
(72) Erfinder: Endres, Günter, 81547 München (DE); Kohl, Klaus, 83714 Miesbach (DE)

(56) Entgegenhaltungen:
- DE-A1-102004 031 879
- DE-A1-102007 023 560
- DE-A1-102009 048 145
- DE-A1-102012 108 169

## Beschreibung

Die Erfindung beschreibt einen tragbaren Datenträger mit einer Linsenstruktur, wobei unter der Linsenstruktur mindestens zwei Informationen angeordnet sind, wobei jede einzelne Information unter einem eigenen Betrachtungswinkel sichtbar ist.

Aus dem Stand der Technik sind tragbare Datenträger, wie z.B. ID-Karten, Personalausweise, Reisepässe, Chipkarten, Kreditkarten, Sozialversicherungskarten, etc. bekannt, die auf ihrer Oberfläche eine Linsenstruktur aufweisen. Mittels der Linsenstruktur sind Informationen, die unter der Linsenstruktur angeordnet sind, aus verschiedenen Betrachtungswinkeln sichtbar. Die verschiedenen Betrachtungswinkel werden durch ein Kippen des Datenträgers erreicht. Als Informationen werden z.B. Bilder, Text oder personenbezogene Daten, verwendet. Die Informationen werden z.B. mittels eines Lasers unter die Linsenstruktur eingeschrieben.

Problematisch ist, dass die unter der Linsenstruktur eingeschriebenen Informationen aufgrund ihrer Sichtbarkeit nicht geschützt sind.

Ferner ist im Stand der Technik die Verwendung von Thermochromfarben zur Absicherung einer Kennzeichnung bekannt, siehe z.B. EP 2 499 001 B1. Bei der Verwendung von Thermochromfarben sind Kennzeichnungen nur mittels eines Wärmeeintrags sichtbar.

Die UV-Stabilität von Thermochromfarben ist für Anwendungen im ID-Bereich aufgrund der bekannt niedrigen UV-Stabilität der auf dem Markt verfügbaren Farben bzw. Pigmente nicht grundsätzlich und damit auch nicht für sämtliche Anforderungen geeignet.

DE 10 2012 108 169 A1 offenbart ein Sicherheitselement in Form eines mehrschichtigen Folienkörpers, mit einem im Durchlicht transparenten ersten Bereich, wobei das Sicherheitselement ein Substrat aufweist, welches in dem ersten Bereich ein oder mehrere transmissive Beugungsstrukturen aufweist, die bei Durchlichtbetrachtung ein oder mehrere optische Sicherheitsmerkmale zeigen. Dieses Dokument offenbart den Oberbegriff von Anspruch 1. DE 10 2009 048145 A1 offenbart einen Datenträger, insbesondere ein Wert- oder Sicherheitsdokument, mit einem Fenster, das sich von einer Unterseite zu einer Oberseite des Datenträgers erstreckt, einem Folienelement mit einem Sicherheitselement, das das Fenster auf der Oberseite des Datenträgers abdeckt, wobei ein Teil des Sicherheitselements über dem Fenster und ein Teil des Sicherheitselements neben dem Fenster liegt, wobei der über dem Fenster liegende Teil des Sicherheitselements einen Strahlungsmodifikationsbereich aufweist, der im Passer zu dem Fenster steht und in dem das visuelle Erscheinungsbild des Sicherheitselements durch Einwirkung von elektromagnetischer Strahlung modifiziert ist.

DE 10 2007 023 560 A1 offenbart einen Mehrschichtkörper, insbesondere ein Sicherheitsdokument mit einem Trägersubstrat und mit einer transparenten Schicht, die zumindest teilweise in einem Fenster oder in einem transparenten Bereich des Trägersubstrats angeordnet ist, wobei die transparente Schicht mindestens einen ersten und einen zweiten Teilbereich mit variierender Brechzahl aufweist, die in der von der transparenten Schicht aufgespannten Schichtebene nebeneinander angeordnet sind, wobei der mindestens erste und der mindestens zweite Teilbereich zumindest teilweise in dem Fenster oder in dem transparenten Bereich des Trägersubstrats angeordnet sind; dass jeder der Teilbereiche eine Vielzahl periodisch angeordneter, ein optisch wirkendes Element ausbildender, durch Brechzahlvariation gebildeter Knoten, die in im wesentlichen parallel zueinander verlaufenden Ebenen angeordnet sind, aufweist; und dass die Ebenen in dem mindestens ersten Teilbereich nicht parallel zu den Ebenen in dem mindestens zweiten Teilbereich sind und dass mindestens in einem der Teilbereiche die Ebenen weder parallel noch senkrecht zu der Schichtebene verlaufen, so dass sowohl das auf die Vorderseite als auch das auf die Rückseite des Mehrschichtkörpers fallende Licht durch die optisch wirkenden Elemente gebeugt wird und die Elemente im Auflicht eine in Vorderansicht und in Rückansicht unterschiedliche optische Wirkung ausbilden.

DE 10 2004 031 879 A1 offenbart ein Sicherheitselement zur RF-Identifikation, wobei das Sicherheitselement einen flexiblen Folienkörper aufweist, in den eine elektronische Schaltung, die zur Speicherung von sicherheitsrelevanten Informationen eingerichtet ist, und eine RF-Antenne integriert ist, die mit der elektronischen Schaltung verbunden ist und zur berührungslosen Kommunikation der elektronischen Schaltung mit einer Prüfeinrichtung dient, wobei auf einer Oberfläche des flexiblen Folienkörpers ein erstes optisch variables Element dauerhaft befestigt ist, das den Bereich des flexiblen Folienkörpers, in dem die elektronische Schaltung angeordnet ist, zumindest bereichsweise überdeckt.

Ausgehend vom Stand der Technik ist es Aufgabe der Erfindung eine Lösung zu finden, welche die beschriebenen Nachteile vermeidet.

Es ist insbesondere die Aufgabe der Erfindung, dass eine Information, die unter einer Linsenstruktur eines tragbaren Datenträgers angeordnet ist, zwar für einen berechtigten Benutzer gut erkennbar ist, aber gleichzeitig vor einem unberechtigten Zugriff eines Dritten geschützt ist.

Die Aufgabe der Erfindung wird durch den unabhängigen Anspruch gelöst. Vorteilhafte Ausführungen sind in den abhängigen Ansprüchen beschrieben. Zur Lösung der Aufgabe offenbart die Erfindung einen tragbaren Datenträger gemäss Anspruch 1. Der Vorteil der Erfindung ist, dass die Reihenfolge der Informationen nur während eines Kippens des Datenträgers in Kipprichtung sichtbar wird. Dabei wird im Verlauf des Kippens in Abhängigkeit vom aktuellen Kippwinkel des Datenträgers mindestens eine Information sichtbar. Ohne Kippen des Datenträgers in Kipprichtung sind die Informationen zwar sichtbar, aber die Reihenfolge der Informationen, z.B. in Form von Zahlen, ist nicht zu erkennen. Bei einem Kippen in umgekehrter Kipprichtung wird lediglich die Reihenfolge der Informationen vertauscht.

Ein vorteilhaftes Ausführungsbeispiel ist; dass ein Startkennzeichen auf dem Datenträger angeordnet ist, das den gleichen Betrachtungswinkel hat, wie eine erste Information in der Reihenfolge, um die erste Information der Reihenfolge anzuzeigen.

Der Vorteil des Startkennzeichens für einen Benutzer ist, dass das Startkennzeichen einen Anfang der Reihenfolge anzeigt. Das Startkennzeichen hat den gleichen Betrachtungswinkel wie die erste Information der Reihenfolge. Somit erkennt der Benutzer, dass die Information, welche unter dem gleichen Betrachtungswinkel wie das Startkennzeichen sichtbar ist, die erste Information in der Reihenfolge ist.

Ein weiteres vorteilhaftes Ausführungsbeispiel ist, dass ein Richtungskennzeichen auf dem Datenträger angeordnet ist, das den gleichen Betrachtungswinkel hat, wie die erste Information in der Reihenfolge, und die Kipprichtung des Datenträgers anzeigt, um die Reihenfolge der Informationen anzuzeigen.

Das Richtungskennzeichen erlaubt das einfache Erkennen, in welcher Kipprichtung der Datenträger von dem Benutzer gekippt werden muss, damit die Reihenfolge der Informationen sichtbar wird.

Ein weiteres vorteilhaftes Ausführungsbeispiel ist, dass mindestens zwei Informationen unter dem gleichen Betrachtungswinkel sichtbar sind.

Ein weiteres vorteilhaftes Ausführungsbeispiel ist, dass die Information eine Zahl, ein Buchstabe, ein Symbol, ein Zeichen, eine Figur, ein Bild und/oder ein Foto ist.

Ein weiteres vorteilhaftes Ausführungsbeispiel ist, dass das Startkennzeichen eine Zahl, ein Buchstabe, ein Symbol, ein Zeichen, eine Figur, ein Bild und/oder ein Foto ist.

Ein weiteres vorteilhaftes Ausführungsbeispiel ist, dass das Richtungskennzeichen eine Zahl, ein Buchstabe, ein Symbol, ein Zeichen, eine Figur, ein Bild und/oder ein Foto ist.

Ein weiteres vorteilhaftes Ausführungsbeispiel ist, dass der Datenträger aus mindestens zwei Schichten besteht.

Ein weiteres vorteilhaftes Ausführungsbeispiel ist, dass der Datenträger einen Chip zur Datenverarbeitung aufweist.

Ein weiteres vorteilhaftes Ausführungsbeispiel ist, dass der Datenträger eine kontaktlose und/oder eine kontaktgebundene Schnittstelle zur Datenübertragung des Chips aufweist.

Im Folgenden werden Ausführungsbeispiele der Erfindung anhand der beigefügten Figuren beschrieben.
Figur 1 zeigt ein erstes Ausführungsbeispiel eines erfindungsgemäßen Datenträgers mit sichtbaren Informationen.
Figuren 2 und 3 zeigen verschiedene Ausführungsbeispiele für unterschiedliche sichtbare Reihenfolgen von Informationen.
Figur 4 zeigt ein Ausführungsbeispiel eines erfindungsgemäßen Datenträgers, der zusätzlich mit einem Start- und einem Richtungskennzeichen ausgestattet ist.
Figur 5 zeigt ein Ausführungsbeispiel für die sichtbare Reihenfolge von Informationen in Verbindung mit dem Start- und dem Richtungskennzeichen.

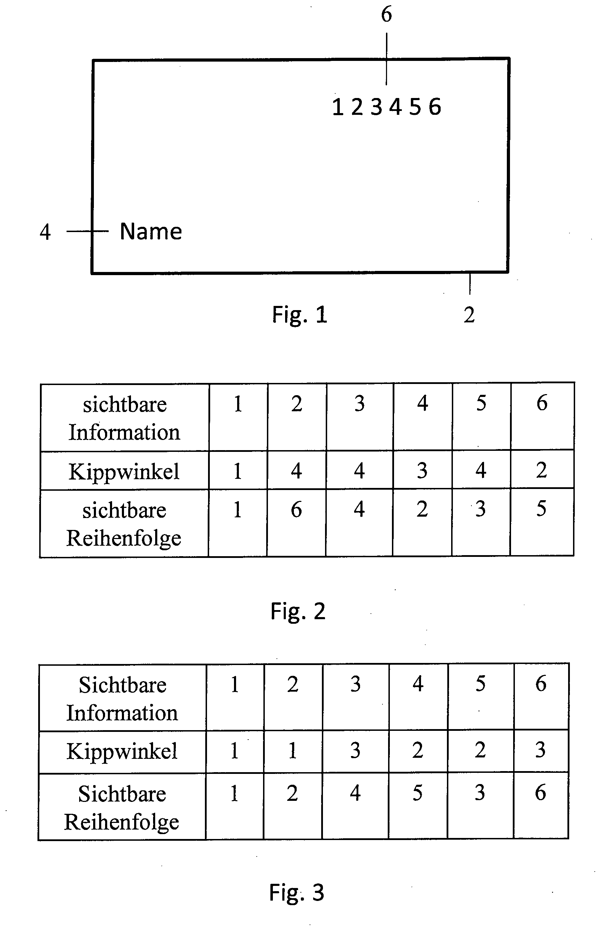

Figur 1 zeigt einen erfindungsgemäßen Datenträger 2, auf dessen Oberfläche beispielsweise ein Name 4 des Benutzers und als Beispiel für die sichtbaren Informationen 6 Zahlen von 1 bis 6 angeordnet sind. Die Zahlen 1 bis 6 sind unter einer Linsenstruktur angeordnet, wobei jede Zahl nur unter ihrem eigenen Betrachtungswinkel sichtbar ist. Die Linsenstruktur ist nicht dargestellt. Zwei oder mehr Zahlen können einen identischen oder gemeinsamen Betrachtungswinkel haben. Der Datenträger 2 besteht vorteilhafterweise aus mehreren Folienschichten, die mittels Druck und Wärme miteinander laminiert sind. Desweiteren weist der Datenträger einen Chip zur Datenverarbeitung auf. Der Chip ist mit einer kontaktlosen und/oder kontaktgebundenen Schnittstelle verbunden. Die Schnittstelle dient zur Daten- und Energieübertragung.

Die Figuren 2 und 3 zeigen Beispiele für eine Reihenfolge der sichtbaren Information in Abhängigkeit vom Kippwinkel.

In Figur 2 ist eine Tabelle dargestellt, die in ihrer ersten Zeile als sichtbare Information die Zahlen 1 bis 6 zeigt. Jede Zahl hat dabei einen eigenen Kippwinkel, unter der die jeweilige Zahl sichtbar ist. Die Kippwinkel sind hier in der zweiten Zeile zur Erklärung des Prinzips der Erfindung nur mit Nummern von 1 bis 4 bezeichnet. Beispielsweise hat die Zahl 2 den Kippwinkel 4. Bei einem reellen Ausführungsbeispiel entsprechen die Nummern der Kippwinkel einem bestimmten Winkel, um den der Datenträger verkippt werden muss, damit die jeweilige Information sichtbar ist. In der dritten Zeile steht die sichtbare Reihenfolge der Informationen bei einem Verkippen des Datenträgers. In diesem Ausführungsbeispiel sind die Informationen in Form der Zahlen 1, 2, 3, 4, 5 und 6 in der Reihenfolge 1, 6, 4, 2, 3 und 5 nacheinander sichtbar, wenn der Datenträger entsprechend verkippt wird.

Figur 3 zeigt ein weiteres Ausführungsbeispiel für eine mögliche Reihenfolge der sichtbaren Informationen in Form der Zahlen 1, 2, 3, 4, 5 und 6. Entsprechend der Zuordnung der sichtbaren Informationen 1, 2, 3, 4, 5 und 6 zu den jeweiligen Kippwinkeln 1, 2, 3 und 4 ergibt sich als sichtbare Reihenfolge 1, 2, 4, 5, 3 und 6.

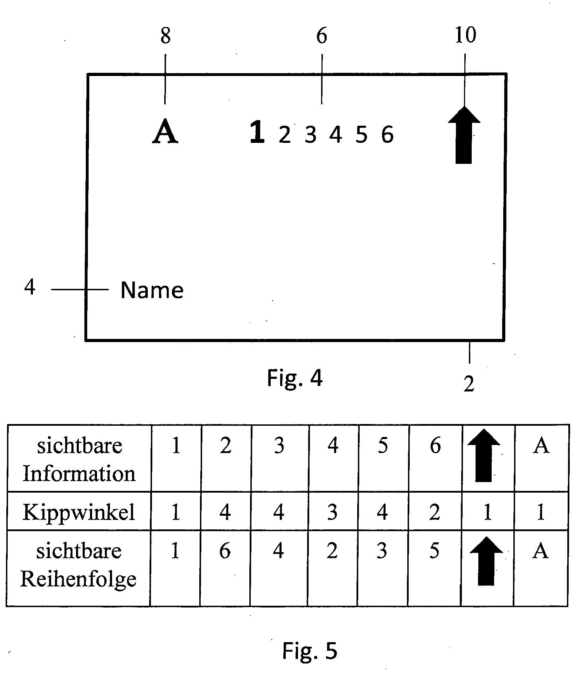

Figur 4 zeigt ein weiteres Ausführungsbeispiel des erfindungsgemäßen Datenträgers 2, wobei hier zusätzlich ein Startkennzeichen 8 und ein Richtungskennzeichen 10 dargestellt sind.

Vorteilhafterweise haben das Startkennzeichen 8 und das Richtungskennzeichen 10 den identischen Kippwinkel wie die erste sichtbare Information 6 in der Reihenfolge der sichtbaren Informationen 6. Prinzipiell können das Startkennzeichen 8 und das Richtungskennzeichen 10 jeden anderen geeigneten Kippwinkel aufweisen.

Das Startkennzeichen 8 kann jede beliebige geeignete Form aufweisen, wie z.B. eine Zahl, einen Buchstaben oder ein Bild.

Das Richtungskennzeichen 10 kann prinzipiell jede geeignete Form aufweisen, wobei vorteilhafterweise ein Symbol in Pfeilform verwendet wird, das die Kipprichtung des Datenträgers 2 anzeigt, in welcher die Reihenfolge der Information 6 sichtbar wird.

Figur 5 zeigt wie die Figuren 2 und 3 in der ersten Zeile die sichtbaren Informationen, die hier um das Startkennzeichen 8 und das Richtungskennzeichen 10 ergänzt sind. In diesem Ausführungsbeispiel haben das Startkennzeichen 8 und das Richtungskennzeichen 10 den identischen Kippwinkel wie die erste sichtbare Information 6. Das bedeutet, dass die erste Information 6, das Startkennzeichen 8 und das Richtungskennzeichen 10 unter dem identischen Kippwinkel sichtbar werden. Die sichtbare Reihenfolge in diesem Ausführungsbeispiel ist damit 1, A, 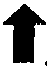 , 6,4, 2, 3 und 5 bei einem Verkippen des Datenträgers 2 in Kipprichtung.

Der Vorteil der Erfindung ist somit, dass selbst wenn die Informationen 6 sichtbar sind, die Reihenfolge der Informtionen 6 nur durch ein Verkippen des Datenträgers 2 in einer bestimmten Richtung sichtbar werden.

### Bezugszeichenliste

- 2: Datenträger
- 4: Name des Benutzers des Datenträgers
- 6: sichtbare Informationen, z.B. in Form von Zahlen
- 8: Startkennzeichen
- 10: Richtungskennzeichen

## Patentansprüche

1. Tragbarer Datenträger (2) mit einer Linsenstruktur,
wobei unter der Linsenstruktur mindestens zwei Informationen (6) angeordnet sind,
wobei jede einzelne Information (6) unter einem eigenen Betrachtungswinkel sichtbar ist,
wobei eine Reihenfolge der Informationen (6) nur in einer bestimmten Kipprichtung des Datenträgers (2) sichtbar ist,
**dadurch gekennzeichnet, dass**
ein Startkennzeichen (8) auf dem Datenträger (2) angeordnet ist, das den gleichen Betrachtungswinkel hat, wie eine erste Information (6) in der Reihenfolge, um die erste Information (6) der Reihenfolge anzuzeigen,
wobei ein Richtungskennzeichen (10) auf dem Datenträger (2) angeordnet ist, das den gleichen Betrachtungswinkel hat, wie die erste Information (6) in der Reihenfolge, und die Kipprichtung des Datenträgers (2) anzeigt, um die Reihenfolge der Informationen (6) anzuzeigen.

2. Datenträger (2) nach einem der vorhergehenden Ansprüche, **dadurch gekennzeichnet, dass** mindestens zwei Informationen (6) unter dem gleichen Betrachtungswinkel sichtbar sind.

3. Datenträger (6) nach einem der vorhergehenden Ansprüche, **dadurch gekennzeichnet, dass** die Information (6) eine Zahl, ein Buchstabe, ein Symbol, ein Zeichen, eine Figur, ein Bild und/oder ein Foto ist.

4. Datenträger nach einem der vorhergehenden Ansprüche, **dadurch gekennzeichnet, dass** das Startkennzeichen (8) eine Zahl, ein Buchstabe, ein Symbol, ein Zeichen, eine Figur, ein Bild und/oder ein Foto ist.

5. Datenträger nach einem der vorhergehenden Ansprüche, **dadurch gekennzeichnet, dass** das Richtungskennzeichen (10) eine Zahl, ein Buchstabe, ein Symbol, ein Zeichen, eine Figur, ein Bild und/oder ein Foto ist.

6. Datenträger nach einem der vorhergehenden Ansprüche, **dadurch gekennzeichnet, dass** der Datenträger (2) aus mindestens zwei Schichten besteht.

7. Datenträger nach einem der vorhergehenden Ansprüche, **dadurch gekennzeichnet, dass** der Datenträger (2) einen Chip zur Datenverarbeitung aufweist.

8. Datenträger nach einem der vorhergehenden Ansprüche, **dadurch gekennzeichnet, dass** der Datenträger (2) eine kontaktlose und/oder eine kontaktgebundene Schnittstelle zur Datenübertragung des Chips aufweist.

## Claims

1. A portable data carrier (2) with a lens structure,
wherein below the lens structure at least two information items (6) are arranged,
wherein each individual information item (6) is visible from a viewing angle of its own,
wherein an order of the information items (6) is visible only in a certain tilting direction of the data carrier (2),
**characterized in that**
a start mark (8) is arranged on the data carrier (2), which has the same viewing angle as a first information item (6) in the order, so as to indicate the first information item (6) of the order,
wherein a direction mark (10) is arranged on the data carrier (2), which has the same viewing angle as the first information item (6) in the order and indicates the tilting direction of the data carrier (2), so as to indicate the order of the information items (6).

2. The data carrier (2) according to any one of the preceding claims, **characterized in that** at least two information items (6) are visible from the same viewing angle.

3. The data carrier (6) according to any one of the preceding claims, **characterized in that** the information item (6) is a number, a letter, a symbol, a character, a figure, an image and/or a photo.

4. The data carrier according to any one of the preceding claims, **characterized in that** the start mark (8) is a number, a letter, a symbol, a character, a figure, an image and/or a photo.

5. The data carrier according to any one of the preceding claims, **characterized in that** the direction mark (10) is a number, a letter, a symbol, a character, a figure, an image and/or a photo.

6. The data carrier according to any one of the preceding claims, **characterized in that** the data carrier (2) consists of at least two layers.

7. The data carrier according to any one of the preceding claims, **characterized in that** the data carrier (2) has a chip for data processing.

8. The data carrier according to any one of the preceding claims, **characterized in that** the data carrier (2) has a contactless and/or a contact-type interface for data transmission of the chip.

## Revendications

1. Support de données (2) doté d'une structure lenticulaire,
cependant que, sous la structure lenticulaire, au moins deux informations (6) sont agencées,
cependant que chaque information (6) est visible sous un propre angle d'observation,
cependant qu'une séquence des informations (6) n'est visible que dans une direction de basculement déterminée du support de données (2),
**caractérisé en ce que**
une marque de départ (8) est agencée sur le support de données (2), laquelle a le même angle d'observation qu'une première information (6) dans la séquence afin d'indiquer la première information (6) de la séquence,
cependant qu'une marque de direction (10) est agencée sur le support de données (2), laquelle a le même angle d'observation que la première information (6) dans la séquence, et indique la direction de basculement du support de données (2) afin d'indiquer la séquence des informations (6).

2. Support de données (2) selon une des revendications précédentes, **caractérisé en ce qu'**au moins deux informations (6) sont visibles sous le même angle d'observation.

3. Support de données (6) selon une des revendications précédentes, **caractérisé en ce que** l'information (6) est un chiffre, une lettre, un symbole, un caractère, une figure, une image et/ou une photo.

4. Support de données selon une des revendications précédentes, **caractérisé en ce que** la marque de départ (8) est un chiffre, une lettre, un symbole, un caractère, une figure, une image et/ou une photo.

5. Support de données selon une des revendications précédentes, **caractérisé en ce que** la marque de direction (10) est un chiffre, une lettre, un symbole, un caractère, une figure, une image et/ou une photo.

6. Support de données selon une des revendications précédentes, **caractérisé en ce que** le support de données (2) consiste en au moins deux couches.

7. Support de données selon une des revendications précédentes, **caractérisé en ce que** le support de données (2) comporte une puce pour le traitement de données.

8. Support de données selon une des revendications précédentes, **caractérisé en ce que** le support de données (2) comporte une interface sans et/ou avec contact pour la transmission de données de la puce.
